# EUROPEAN PATENT APPLICATION

(11) **EP 4 459 741 A1**
(43) Date of publication of application: **06.11.2024**
(21) Application number: 22916489.2
(22) Date of filing: 02.12.2022
(51) Int. Cl.: H01M 10/54, H01M 10/44, H01M 10/63

(54) **WASTE BATTERY DISCHARGE PROCESS**

(30) Priority: 30.12.2021 KR 20210192026
(71) Applicant: Mintech Co., Ltd., Daejeon 34026 (KR)
(72) Inventor: HONG, Young Jin, Daejeon 34010 (KR); KIM, Du Ri, Daejeon 34007 (KR); CHOI, Sung Ho, Daejeon 34008 (KR); LEE, Young Jae, Daejeon 34010 (KR); MYOUNG, Seok Han, Seoul 07638 (KR); JU, Yu Jin, Daejeon 34008 (KR); JEONG, Ji Hyeon, Daejeon 35273 (KR)
(74) Representative: Gille Hrabal Partnerschaftsgesellschaft mbB Patentanwälte
(86) International application number: PCT/KR2022/019471
(87) International publication number: WO 2023/128343

(57) **Abstract**

The present invention relates to a waste battery discharge process for recycling a waste battery, and more particularly, to a process for checking stability, a state of charge, and a remaining life of the waste battery before reusing or recycling the waste battery (battery after use), and safely and cost-effectively discharging the waste battery.

## Description

### TECHNICAL FIELD

The present invention relates to a waste battery discharge process for recycling a waste battery, and more particularly, to a process for checking stability, a state of charge, and a remaining life of the waste battery before reusing or recycling the waste battery (battery after use), and safely and cost-effectively discharging the waste battery.

### BACKGROUND ART

Recently, the use of large-capacity lithium-ion batteries is increasing due to the recent domestic carbon neutrality declaration and domestic electric vehicle distribution policy. These batteries are widely used in electric vehicles or hybrid vehicles that require large electric capacity, and electric vehicles are attracting the most attention as a means of solving the climate change problem through carbon neutrality. However, due to the use of such a large number of batteries, the amount of waste batteries generated from electric vehicles is expected to increase rapidly in the future.

Meanwhile, when waste batteries for a vehicle, which are used in an eco-friendly vehicle and are collected, are immediately disposed (for example, recovery of resources, etc.), it is expected that enormous annual disposal costs will be incurred from 2024, and disposal costs will increase explosively from 2031 onwards. In order to solve some of these problems, although the waste batteries for a vehicle need to be recycled to another application field, safety cannot be guaranteed due to the energy remaining in the waste batteries, i.e., the pre-charged power, and thus recycling waste batteries for a vehicle having a risk of fire or explosion as them without any guarantee is technically and socially very dangerous.

Therefore, in order to recycle/reuse the the waste battery, the energy remaining in the waste battery, that is, the pre-charged power needs to be lowered to a predetermined SOC or lower or fully discharged.

In the past, in order to solve this problem, a method (salt water precipitation method) of collecting waste batteries from eco-friendly vehicles and then immersing the waste batteries in salt water to discharge the pre-charged power in the waste batteries was mainly used (Korean Patent Publication No. 10- 2019-0018340), but the method of discharging the waste batteries by immersing them in salt water requires a lot of time, and there is a problem that immersing the waste batteries collected from eco-friendly vehicles (medium to large waste batteries) in salt water requires a large space, which is not cost-effective, and there was a problem that retreating waste water could cause environmental pollution.

In addition, even if the waste battery is simply discharged using a discharge device that uses current, when a discharge of removing energy in the waste battery is carried out without considering the materials that constitute the battery (anode material, cathode material, electrolyte, etc.) and design characteristics, it can cause a serious load in the waste battery. For example, if a waste battery is simply rapidly discharged, swelling phenomenon due to side reaction with electrolyte in the waste battery and heat generation within the battery due to over-discharge occur, which may cause safety problems such as causing thermal runaway and ignition, and safety problems due to open-circuit voltage may occur even after the discharge.

Therefore, there is a need for a method for easily reusing or recycling the waste battery by safely and environmentally-friendly discharging the pre-charged power remaining in the waste battery, that is, the residual energy, before reuse or recycling of the waste battery.

### DISCLOSURE OF THE INVENTION

### TECHNICAL PROBLEM

A first problem to be solved by the present invention is to provide a battery discharge process for discharging pre-charged power in a waste battery before reuse or recycling of the waste battery.

A second problem to be solved by the present invention is to provide a discharge process capable of discharging the waste battery in a cost-effective, safe, and environmentally friendly manner by replacing a conventional salt water precipitation method.

A third problem to be solved by the present invention is to provide an optimal discharge process that takes into account the type of waste battery and the materials constituting the electrodes (anode material, cathode material, electrolyte, etc.), and design.

The objects of the present invention are not limited to those described above, and other objects and advantages of the present invention that are not described can be understood by the following description and will be more clearly understood by the examples of the present invention. In addition, it will be readily apparent that the objects and advantages of the present invention can be realized by means as set forth in the claims and combinations thereof.

### TECHNICAL SOLUTION

A battery discharge process according to an embodiment of the present invention for achieving the above-described problem including
(S100) step of preparing a waste battery,
(S200) step of discharging the waste battery to a designated first discharge voltage or first discharge SOC through a connection terminal connected to a power terminal of the waste battery,
(S300) step of discharging the waste battery to a designated second discharge voltage through the connection terminal connected to the power terminal of the waste battery,
(S400) step of applying a constant voltage when the voltage of the waste battery reaches a designated second discharge voltage, and
(S500) step of removing residual energy by generating a short circuit in the waste battery;
is provided as a waste battery discharge process.

In an embodiment of the present invention, the discharge in the step (S200) is discharged at a first current magnitude, and the first current magnitude is 0.2 C (C-rate) to 5.0 C (C-rate), preferably 0.5 C (C-rate) to 3.0 C (C-rate).

In an embodiment of the present invention, the first discharge voltage in the step (S200) is 0.05 V to 3.0 V, preferably 0.1 V to 2.5 V, based on a single cell.

In an embodiment of the present invention, the first discharge SOC in the step (S200) is 0% to 50%, preferably 0% to 30%.

In an embodiment of the present invention, the discharge in the step (S300) is discharged at a second current magnitude, and the second current magnitude is 10% to 50% of the first current magnitude, preferably 20% to 30%.

In an embodiment of the present invention, the second discharge voltage in the step (S300) is 0 V to 0.5 V, preferably 0 V to 0.1 V, based on a single cell.

In an embodiment of the present invention, the constant voltage applied in step (S400) is equal to the second discharge voltage.

In an embodiment of the present invention, the constant voltage in step (S400) is applied until a cutoff current of 0.005 to 0.5 C, or 0.01 to 0.1 C is measured.

The means for solving the problem does not enumerate all of the features of the present invention. The various features of the present invention and advantages and effects thereof can be understood in more detail with reference to the following detailed embodiments.

### ADVANTAGEOUS EFFECTS

A method for discharging the residual energy remaining in a waste battery through a wet discharge method such as a conventional salt water precipitation method not only takes a long time and costs a lot of money, but also has problems with environmental pollution such as waste water disposal, and thus it has limitations in large-scale and large-capacity discharge. In contrast, the waste battery discharge process according to the present invention is a dry method, which avoids the above-described conventional problems and enables discharge within a short period of time, and in which there is no need to treat waste salt water, thereby allowing the waste batteries to be recycled or reused in an environmentally friendly and cost-effective manner.

The waste battery discharge process according to the present invention can provide a discharge process that comprehensively considers characteristics that may vary depending on battery constituent materials and design, such as battery specification information and electrode material information included in the battery.

The waste battery discharge process according to the present invention can be used as a basic facility for storage, movement, and reuse of waste batteries, and can be expected to improve the safety in the battery reuse and recycling industry.

In addition to the above-described effects, the specific effects of the present invention will be described below while describing the specific details for implementing the invention.

### BRIEF DESCRIPTION OF THE DRAWINGS

FIG. 1 shows a configuration of a discharge system 100 according to an embodiment of the present invention.
FIG. 2 is a flowchart for describing a waste battery discharge process according to an embodiment of the present invention.
FIG. 3 illustrates a step-by-step discharge process of the present invention using a voltage curve, in accordance with one embodiment of the present invention.
FIG. 4 shows an OCV rebounding phenomenon that may occur when a battery is discharged.

### MODE FOR CARRYING OUT THE INVENTION

Hereinafter, the principles of preferred embodiments of the present invention will be described in detail with reference to the accompanying drawings and description. However, the drawings shown below and the description which will be described below are for preferred implementation methods among various methods for effectively describing the characteristics of the present invention, and the present invention is not limited to the drawings and description below.

Meanwhile, terms such as first or second may be used to describe various components, but these terms should be interpreted only for the purpose of distinguishing one component from another component. For example, a first component may be named a second component, and similarly, the second component may also be named a first component.

Singular expressions include plural expressions, unless the context clearly indicates otherwise. It is to be understood that, in this specification, terms such as "comprise" or "have" are intended to designate the presence of described features, numbers, steps, operations, components, parts, or combinations thereof, but do not preclude the presence or addition of one or more other features, numbers, steps, operations, components, parts, or combinations thereof.

Unless otherwise defined, all terms used herein, including technical or scientific terms, have the same meaning as commonly understood by a person of ordinary skill in the relevant technical field. Terms that are defined in commonly used dictionaries are should be interpreted as having a meaning consistent with the meaning in the context of the related technology, and should not be interpreted in an idealized or overly formal sense unless clearly defined in this specification.

Hereinafter, a waste battery discharge process according to an embodiment of the present invention will be described with reference to the accompanying drawings.

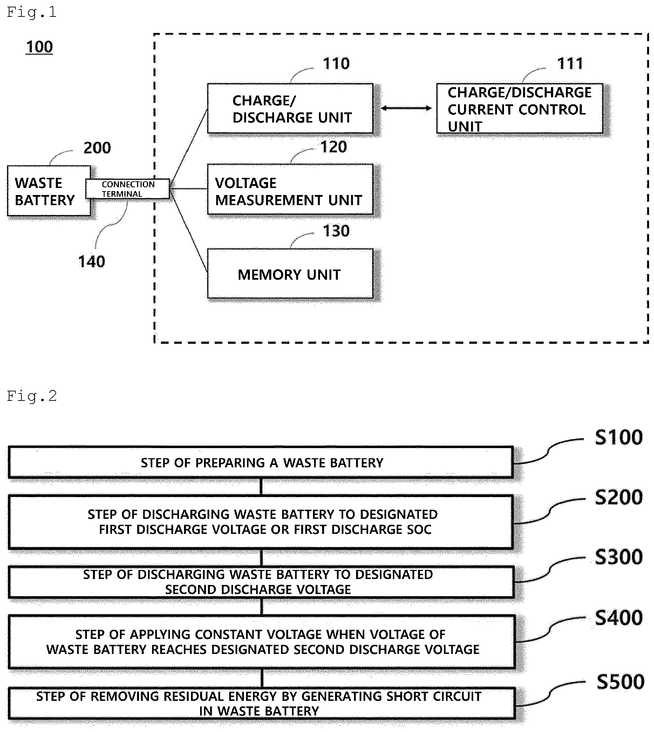

First, FIG. 1 is a block diagram of a discharge system according to an embodiment of the present invention. Referring to FIG. 1, a discharge system 100 according to an embodiment of the present invention includes a charge/discharge unit 110 that adjusts the current through a connection terminal 140 connected to a waste battery 200, a voltage measurement unit 120, and a memory unit 130.

The connection terminal of the connection unit 140 is electrically connected to a power terminal of the waste battery, and the connection unit 140 measures a voltage value or current value of the waste battery 200 through the connection terminal, or provides an electrical circuit for charging or discharging the waste battery.

FIG. 2 is a flowchart for describing a process of discharging a waste battery step by step according to an embodiment of the present invention. Referring to FIG. 2, a waste battery discharge process including
(S100) step of preparing a waste battery,
(S200) step of discharging the waste battery to a designated first discharge voltage or first discharge SOC through a connection terminal connected to a power terminal of the waste battery,
(S300) step of discharging the waste battery to a designated second discharge voltage through the connection terminal connected to the power terminal of the waste battery,
(S400) step of applying a constant voltage when the voltage of the waste battery reaches a designated second discharge voltage, and
(S500) step of removing residual energy by generating a short circuit in the waste battery
is provided in the present invention.

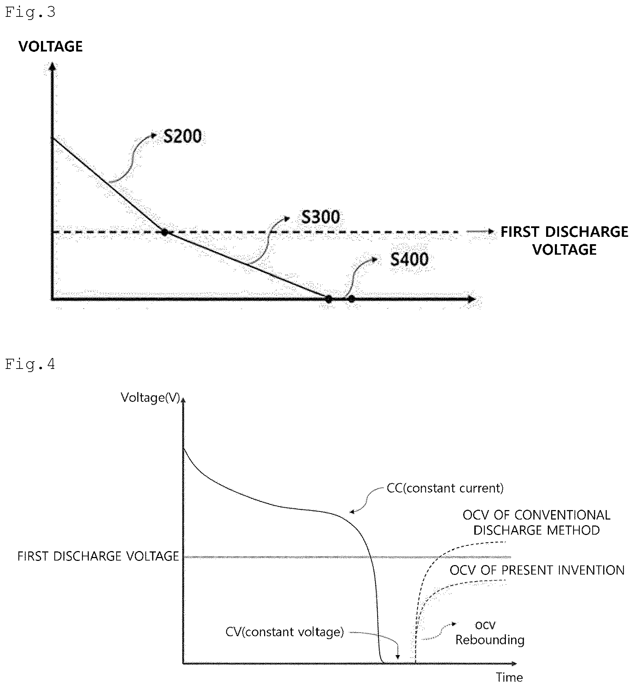

And FIG. 3 is an example of a voltage curve reflecting the waste battery discharge process according to an embodiment of the present invention.

Meanwhile, in the the waste battery discharge process according to the present invention, a method of discharging a battery uses constant current-constant voltage (CC-CV) method, which discharges the battery at a constant current until a specific voltage and then discharges at a constant voltage until a preset low current is reached, and the present invention is characterized by its detailed process.

In the following, a configuration of the present invention will be described in more detail.

### 1. (S100) Step of Preparing a waste battery

Before describing the discharge process of a waste battery of the present invention, the waste battery referred to in the present invention refers to a waste battery for vehicles, which is used in an eco-friendly vehicle (e.g., electric vehicles, hydrogen vehicles, etc.) and is collected for various reasons (e.g., inspection, repair, expiration, accident, scrapped vehicle, etc.) and a battery to be inspected is either a battery cell, a battery module, or a battery pack.

In the waste battery discharge process according to the present invention, when the waste battery is a battery module, the battery module may include N (N ≥ 2) battery cells, a battery manufacturer's BMS installed by the battery manufacturer at the time of manufacturing the vehicle battery, and may include a vehicle case provided at the time of manufacturing the battery or installing the battery in the vehicle (however, the vehicle case can be omitted if installed in the vehicle without a separate case).

In the waste battery discharge process according to the present invention, the step (S100) of preparing the waste battery may be a step of collecting a waste battery from the eco-friendly vehicle, separating the battery manufacturer's BMS and the vehicle case (can be omitted) from the waste battery, and then preparing (or receiving) a battery module including N battery cells.

Meanwhile, the discharge process of a waste battery according to the present invention may include a step of specifying the specifications of the waste battery after preparing the waste battery (S110) and a step of performing an electric flow test of the waste battery (S120).

Specifically, the step of selecting the specifications of the waste battery is a step of determining a type of waste battery by considering the components that constitutes the waste battery (anode material, cathode material, electrolyte, etc.). Since a battery's capacity-voltage curve that represents the battery's discharge characteristics is determined by the anode material and the cathode material, the specifications of the waste battery must always be considered in order to set specific conditions of the discharge process, such as a first discharge voltage and a second discharge voltage, which will be described later.

Meanwhile, the electric flow test (S120) may include an insulation resistance measurement step (S1121), a voltage measurement step (S1122), and an electrochemical impedance spectroscopy (EIS) measurement step (S1123). In this way, by performing an electric flow test before discharging the waste battery, it is possible to evaluate the electrical safety of the waste battery that will undergo the discharge process and diagnose the state of charge (SOC) and state of health (SOH) of the waste battery. In this case, the SOC and SOH measured in the electric flow inspection step are applied to set the conditions for the subsequent discharge process.

The discharge process of a waste battery according to the present invention may further include a step of designing optimal discharge process conditions based on the results of the step of specifying the specifications of the waste battery (S110) and the electric flow inspection step (S120) (S130).

Specifically, in step (S130), discharge conditions such as a first discharge voltage, a second discharge voltage, a constant voltage, a first current, a second current, and a cutoff current, which will be described later, are set.

### 2. (S200) Step of discharging the waste battery to a designated first discharge voltage or first discharge SOC through a connection terminal connected to the power terminal of the waste battery

In the waste battery discharge process according to the present invention, the step (S200) is a step of discharging the waste battery to a first discharge voltage/first discharge SOC, which is a preset voltage/SOC, of the waste battery, through the connection terminal connected to the power terminal of the waste battery. In the present invention, the step (S200) may vary depending on the characteristics of the waste battery, e.g., the type of components (electrode material) that constitutes the waste battery.

As described above, since the waste battery for a vehicle, which is used in eco-friendly vehicles and is collected, is collected for various reasons, the waste battery for a vehicle may not be collected in a state where the pre-charged energy has been fully discharged. It is very dangerous to recycle a charged battery as it is without any warranty because it has the risk of fire or explosion if external shock or stimulation occurs in the charged battery due to the energy stored inside it. Therefore, the step (S200) is a step of discharging the waste battery through a terminal connected to the waste battery in order to lower the level of energy charged in the waste battery.

In the waste battery discharge process according to the present invention, the step (S200), which is a discharging step of the present invention, is a step of discharging the waste battery to the first discharge voltage or first discharge SOC. The step (S200) does not fully discharge the charged energy of the waste battery, but rather discharges the battery only to the first discharge voltage or first discharge SOC.

Meanwhile, in step (S200), the first discharge voltage or first discharge SOC means a limit discharge voltage or limit discharge SOC at which the reversible capacity development of the waste battery no longer progresses.

In the present invention, since the step (S200) is a step of discharging the waste battery to a region of reversible capacity development, the waste battery may be recycled/reused after the (S200) step, i.e., discharging the waste battery to the first discharge voltage or first discharge SOC. Therefore, it can also be defined as the 'reuse discharge stage'.

Meanwhile, In the waste battery discharge process according to the present invention, since whether or not the reversible capacity is developed may vary depending on the design of a battery, that is, the anode material and cathode material of the electrode, the first discharge voltage or first discharge SOC can be set variably depending on the anode material and cathode material that constitutes the battery.

In the waste battery discharge process according to the present invention, the first discharge voltage considering the anode material and cathode material constituting the waste battery may be 0.05 V to 3.0 V, preferably 0.1 V to 2.5 V, based on a single cell.

In the waste battery discharge process according to the present invention, the first discharge SOC in the step (S200) is characterized in that it is 0% to 50%, preferably 0% to 30%, and more preferably 5% to 30%.

Meanwhile, in the present invention, voltage refers to the potential difference between the anode and the cathode, and is a value measured on a single cell basis, and for the battery modules or packs, a voltage standard may vary depending on the configuration of the battery. For example, "single cell voltage*N", which is a first discharge voltage in a module or pack where N (N ≥ 2) single cells are connected in series, may be the discharge voltage.

In the waste battery discharge process according to the present invention, the step (S200) may be a step of discharging the waste battery at a first current magnitude through the connection terminal.

Here, the first current magnitude may be a constant current of 0.5 C (C-rate) to 5.0 C (C-rate), preferably 0.5 C (C-rate) to 3.0 C (C-rate).

Here, C-rate is an abbreviation for the current rate and refers to a battery-related characteristic that represents a charge/discharge rate of current according to battery capacity, and actual unit thereof is [/h], and the unit of [C] is generally used. For example, if the battery capacity (the amount of current that can be used for 1 hour) is 1000 mAh and the charge/discharge current is 1 A, the C-rate is 1 C = 1 A/1000 mAh = 1 [/h].

Meanwhile, In the waste battery discharge process according to the present invention, the step (S200) may further include a step (S210) of checking balance information including a difference in charging voltage between N battery cells provided in the battery through the cell connection terminal after discharging the waste battery to the first discharge voltage or first discharge SOC (S210), and a step (S220) of performing a balance check to determine whether the difference in charging voltage between N battery cells included in the balance information matches a preset effective charging voltage balance range.

As described above, by including steps (S210) and (S220), the voltage difference between N battery cells constituting the battery module can be checked. By checking the voltage difference between battery cells in this way, the discharge process in the subsequently step (S300) can be performed more safely.

### 3. (S300) Step of discharging the waste battery to a designated second discharge voltage through a connection terminal connected to the power terminal of the waste battery

In the discharge process of the waste battery according to the present invention, the step (S300) is a step of discharging the waste battery through the connection terminal of the waste battery.

Specifically, the step (S300) is a step of discharging the waste battery to a designated voltage or SOC through the connection terminal of the waste battery.

In the waste battery discharge process according to the present invention, the step (S300) is a step of discharging the waste battery, which is discharged only up to the first discharge voltage or the first discharge SOC in step (S200), again once more, and is a step of discharging the waste battery once more up to a designated discharge voltage, that is, the second discharge voltage. In the present invention, the step (S300) may be a step of discharging the waste battery in a region where reversible capacity is not developed, for example, a region where SOC is 0 or less. Therefore, it can also be defined as an 'irreversible discharge stage' in the sense that the waste battery is discharged beyond a reversible capacity development voltage range of the waste battery.

By discharging the waste battery to the second discharge voltage, most of the energy charged in the waste battery is discharged. Here, the step (S300) is a step distinct from the step (S200).

Meanwhile, the second discharge voltage in step (S300) is a voltage with which most of the previously charged energy can be discharged, and thus may be a voltage where the energy level difference between the positive electrode and negative electrode approaches 0. The second discharge voltage according to the present invention may be 0 V to 0.1 V, preferably 0 V to 0.05 V, based on a single cell.

In the waste battery discharge process according to the present invention, the step (S300) may be a step of discharging the waste battery at a second current magnitude through the connection terminal.

In this case, the second current magnitude may be discharged at a current magnitude of 10% to 50% of the first current magnitude, preferably 20% to 30% of the first current magnitude.

As such, the second current magnitude in step (S300) is characterized in that a current having the second current magnitude smaller than the first current magnitude is applied.

In the discharge process of the present invention, discharging the waste battery to the first discharge voltage/SOC region and then discharging it again to the second discharge voltage is to discharge the waste battery by causing an electrochemical oxidation/reduction reaction within the waste battery. In this case, as the waste battery is discharged closer to the second discharge voltage, a strong oxidation atmosphere is formed at the cathode and a reducing atmosphere is formed at the anode. By discharging the waste battery with a low current magnitude in a low voltage region having these characteristics, the oxidation/reduction reaction of the electrolyte in the waste battery can be reduced. In addition, by discharging the waste battery at a slow current from near the second discharge voltage, it is possible to prevent safety accidents that may occur near the second discharge voltage.

Generally, when there are a large number of waste batteries and the and discharge devices are limited, in order to increase the recycling efficiency of the waste battery, a fast discharge current may be applied to rapidly discharge the waste battery so that the waste battery is in a discharged state. However, if the waste battery is simply rapidly discharged in order to increase the recycling efficiency, rapid discharge may cause acceleration of electrolyte side reactions, which may lead to safety accidents accompanied by battery swelling and heat generation.

### 4. (S400) Step of applying a constant voltage when the voltage of the waste battery reaches a designated second discharge voltage

In the waste battery discharge process according to the present invention, the step (S400) is characterized in that, when the voltage of the waste battery reaches the second discharge voltage, a constant voltage is applied to the waste battery.

By applying the constant voltage in step (S400), a full discharge of the waste battery is induced. Therefore, in the present invention, the step (S400) is defined as a 'waste discharge step'.

Here, from the perspective of the electrode material that constitute waste battery, in the case of the negative electrode, the remaining lithium ions lithiated in the negative electrode material are de-lithiated by applying the constant voltage, and in the case of the positive electrode, lithium ions are inserted into the positive electrode material. In this way, by de-lithiating the remaining lithium ions from the cathode, the waste battery can be fully discharged and the energy level remaining in the waste battery can be minimized.

Meanwhile, In the waste battery discharge process according to the present invention, it is characterized in that the constant voltage applied in the (S400) step is a voltage where the energy level difference between the anode and the cathode is close to 0, i.e., a voltage close to 0 V. The closer the voltage is to 0 V, the easier it is for lithium ions to be de-lithiated from the cathode and inserted into the anode.

In the waste battery discharge process according to the present invention, the constant voltage is the same voltage as the second discharge voltage and may be 0 V to 0.5 V, preferably 0 V to 0.1 V, based on a single cell.

In the waste battery discharge process according to the present invention, in step (S400), the constant voltage may be applied until a cut off current magnitude of 0.005 to 0.5 C, preferably 0.01 C to 0.1 C is measured.

Here, the cut-off current refers to a current generated according to the application of the constant voltage. As the constant voltage is continuously applied, the amount of current generated gradually decreases because it approaches full discharge. In this case, when the cutoff current magnitude is within 0.005 C to 0.5 C, preferably 0.01 C to 0.1 C, the constant voltage being applied is stopped and discharge is terminated.

Meanwhile, in general, if the discharge current or voltage is applied to the battery and the application of the current/voltage is stopped, the OCV rebounding phenomenon (OCV recovery phenomenon) may occur, in which the voltage is restored again as the overvoltage caused by the applied current/voltage is resolved, may occur (see FIG. 4).

Here, OCV is an abbreviation for open circuit voltage. It is also called open circuit voltage, and refers to the voltage between both terminals when no load is attached to the battery. Recovery of OCV can be seen as indicating that the state inside the battery is not electrochemically stable, and may make it difficult to achieve the object of the present invention, which is to fully discharge the waste battery.

However, according to the discharge process of the present invention, it was confirmed that the degree of OCV rebounding was greatly reduced, which appears to be due to the improvement of the electrochemical stability in the battery by discharging the waste battery using low current rather than high current in the voltage region below the first discharge voltage.

### 5. (S500) Step of generating a short circuit in the waste battery to remove remaining energy

In the waste battery discharge process according to the present invention, the step (S500) is characterized in that the remaining energy is removed by artificially generating a short circuit in the waste battery.

In this case, in the (S500) step, the remaining energy can be removed by generating an external short circuit with a resistance of 0.1 mQ to 5 Ω, preferably 30 mQ to 1 Ω. By short-circuiting the waste battery in this way, the possibility of sparks and fire occurring during the recycling stage can be suppressed.

Although the preferred embodiments of the present invention have been described in detail above, the scope of rights of the present invention is not limited thereto, and various modifications and improvements made by those skilled in the art using the basic concept of the present invention defined in the following claims also fall within the scope of rights of the present invention.

## Claims

1. A waste battery discharge process for discharging a waste battery, comprising:
(S100) step of preparing the waste battery; and
(S200) step of discharging the waste battery to a designated first discharge voltage or first discharge SOC through a connection terminal connected to a power terminal of the waste battery.

2. The waste battery discharge process of claim 1, further comprising:
(S300) step of discharging the waste battery to a designated second discharge voltage through the connection terminal connected to the power terminal of the waste battery.

3. The waste battery discharge process of claim 2, further comprising:
(S400) step of applying a constant voltage when the voltage of the waste battery reaches a designated second discharge voltage.

4. The waste battery discharge process of claim 3, further comprising:
(S500) step of removing residual energy by generating a short circuit in the waste battery.

5. The waste battery discharge process of claim 1 or 2, further comprising:
after the step (S100) of preparing the waste,
(S110) step of specifying the specifications of the waste battery; and
(S120) step of performing an electric flow test of the waste battery.

6. The waste battery discharge process of claim 1 or 2, wherein
the discharge in the step (S200) is discharged at a first current magnitude, and the first current magnitude is 0.2 C (C-rate) to 5.0 C (C-rate), or 0.5 C (C-rate) to 3.0 C (C-rate).

7. The waste battery discharge process of claim 1 or 2, wherein
the first discharge voltage in the step (S200) is 0.05 V to 3.0 V, or 0.1 V to 2.5 V, based on a single cell.

8. The waste battery discharge process of claim 1 or 2, wherein
the first discharge SOC in the step (S200) is 0% to 50%, 0% to 30%, or 5% to 30%.

9. The waste battery discharge process of claim 2, wherein
the discharge in the step (S300) is discharged at a second current magnitude, and the second current magnitude is 10% to 50% of the first current magnitude, or 20% to 30%.

10. The waste battery discharge process of claim 2, wherein
the second discharge voltage in the step (S300) is 0 V to 0.5 V, or 0 V to 0.1 V, based on a single cell.

11. The waste battery discharge process of claim 2, wherein
the constant voltage applied in step (S400) is equal to the second discharge voltage of the step (S300).

12. The waste battery discharge process of claim 2, wherein
the constant voltage in step (S400) is applied until a cutoff current magnitude of 0.005 to 0.5 C, or 0.01 to 0.1 C is measured.
